(19) Europäisches Patentamt
European Patent Office
Office européen des brevets

(11) **EP 1 865 084 A1**

(12) **EUROPEAN PATENT APPLICATION**
published in accordance with Art. 158(3) EPC

(43) Date of publication:
**12.12.2007 Bulletin 2007/50**

(51) Int Cl.:
*C22C 38/00* (2006.01)  *C21D 9/46* (2006.01)
*C22C 38/38* (2006.01)  *C23C 2/06* (2006.01)

(21) Application number: **06729903.2**

(22) Date of filing: **24.03.2006**

(86) International application number:
**PCT/JP2006/305955**

(87) International publication number:
**WO 2006/109522 (19.10.2006 Gazette 2006/42)**

(84) Designated Contracting States:
**AT DE FR GB**

(30) Priority: **31.03.2005 JP 2005104799**

(71) Applicant: **Kabushiki Kaisha Kobe Seiko Sho (Kobe Steel, Ltd.)**
**Kobe-shi,**
**Hyogo 651-8585 (JP)**

(72) Inventors:
• **YAMAMOTO, Katsuhiro,**
**c/o Kakogawa Works**
**Kakogawa-SHI,**
**Hyogo 6750137 (JP)**

• **MIURA, Masaaki,**
**c/o Kakogawa Works**
**Kakogawa-shi,**
**Hyogo 6750137 (JP)**
• **UTSUMI, Yukihiro,**
**c/o Kakogawa Works**
**Kakogawa-shi,**
**Hyogo 6750137 (JP)**

(74) Representative: **Gillard, Richard Edward**
**Elkington and Fife LLP**
**Prospect House**
**8 Pembroke Road**
**Sevenoaks**
**Kent TN13 1XR (GB)**

(54) **HOT-DIP GALVANIZED STEEL SHEET AND ALLOYED HOT-DIP GALVANIZED STEEL SHEET**

(57)    Disclosed is a hot-dip galvanized steel sheet, in which a steel sheet of the hot-dip galvanized steel sheet before galvanization contains, on the percent by mass basis, 0.06% to 0.15% carbon (C); 1% to 3% manganese (Mn); 0.01% to 0.05% phosphorus (P); 0.03% to 1% chromium (Cr); 0.03% to 1% molybdenum (Mo); and 0.02% to 0.15% aluminum (Al). The steel sheet before galvanization has a silicon (Si) content of 0.2% or less (inclusive of 0%) and a sulfur (S) content of 0.03% or less (inclusive of 0%) and has a K value of -2.0 or more, in which the K value is calculated according to following Equation (1):

$$\text{K value} = 3 \times [\text{Mo}] - 5 \times [\text{Cr}] \qquad (1)$$

wherein " [Element] " represents the content (percent by mass) of the element.

FIG.2

**Description**

Technical Field

The present invention relates to a hot-dip galvanized steel sheet and a galvannealed steel sheet (alloyed hot-dip galvanized steel sheet).

Background Art

There are steel sheets for structural members such as front longitudinal members which play a role as automotive skeletal members to absorb energy upon collision. These steel sheets should have higher strength from the viewpoint of higher safety or from the viewpoint of lightness in weight of automotive bodies so as to enhance fuel economy to thereby remedy environmental issues. The steel sheets for structural members should also have improved rust preventive property. To exhibit both high strength and improved rust preventive property, high-strength steel sheets each including a high-strength steel sheet with a hot-dip galvanized surface are used. These hot-dip galvanized high-strength steel sheets desirably have a uniform galvanized layer, and high-strength steel sheets for use as base metal materials desirably have good galvanizing ability and do not cause bare spots upon hot-dip galvanization.

When such hot-dip galvanized steel sheets are heated after hot-dip galvanization, iron in the base metal materials (matrix steel sheets) is allowed to diffuse into the galvanized layer, and there occurs alloying between iron and zinc to yield galvannealed steel sheets (hereinafter also referred to as "GA steel sheets"). These galvannealed are excellent in weldability and corrosion resistance after coating and are thereby used in a wide variety of fields.

To manufacture high-strength molded parts using a GA steel sheet, molding conditions such as pressing conditions should be optimized and, in addition, the GA steel sheet itself should have improved workability. As solutions to this, the workability of a base metal material, i.e., a high-strength steel sheet, to be hot-dip galvanized should be improved, and, in addition, the sliding performance and powdering resistance of the GA steel sheet should be increased.

As a technique for increasing the sliding performance of a GA steel sheet, Patent Document 1, for example, proposes a technique of reducing the sliding resistance during pressing-molding by configuring a galvannealed steel sheet to have such a surface shape as to easily hold a liquid lubricant such as a rust preventive oil. According to the technique of using a liquid lubricant, however, the lubricant may be coated unevenly or the lubricant may be degraded due to heat generated when pressing is carried out continuously. This is likely to cause decrease in sliding performance and deterioration in workability.

As a technique for increasing the powdering resistance (adhesion of galvanized layer), Patent Document 2 discloses a technique of controlling the degree of concentration (degree of enrichment) of alloy elements in a very surface area of a base metal material directly below a galvanized layer. After investigations, however, the present inventors found that even the control of the degree of concentration of alloy elements may not sufficiently improve the adhesion of galvanized layer, and this technique is still susceptible to improvement.

Patent Document 3 discloses a technique of improving the peeling resistance by finely dividing crystals of a steel sheet so as to cause outbursts uniformly, as a technique for providing a galvanized layer having good surface properties without bare spots and uneven alloying and for improving the peeling resistance and sliding performance of the galvanized layer. This technique, however, may cause deterioration in sliding performance and/or powdering resistance, because large amounts of alloy elements must be added so as to finely divide the crystals of steel sheet, and this makes it difficult to control the iron concentration in the galvanized layer appropriately.

Patent Document 1: Japanese Unexamined Patent Application Publication (JP-A) No. 247949/2001

Patent Document 2: JP-A No. 115039/2002

Patent Document 3: JP-A No. 323492/1999

Disclosure of the Invention

Problem to be Solved by the Invention

The present invention has been made under these circumstances, and an object of the present invention is to provide a hot-dip galvanized steel sheet using a steel sheet that is resistant to the occurrence of bare spots upon hot-dip galvanization.

Another object of the present invention is to provide a galvannealed steel sheet (alloyed hot-dip galvanized steel sheet) which is prepared through hot-dip galvanization and subsequent alloying (galvannealing) and is excellent in sliding performance and powdering resistance.

Yet another object of the present invention is to provide an automotive member using the hot-dip galvanized steel sheet or the galvannealed steel sheet which is obtained by further alloying the hot-dip galvanized steel sheet.

Means for Solving the Problem

After intensive investigations to provide a steel sheet that is resistant to the occurrence of bare spots upon hot-dip galvanization, the present inventors found that bare spots do not occur upon hot-dip galvanization by strictly specifying the component composition of a steel sheet and appropriately controlling the balance in content between chromium (Cr) and molybdenum (Mo).

In addition, the present inventors made investigations to improve the sliding performance and powdering resistance of a galvannealed steel sheet which is prepared by alloying a hot-dip galvanized steel sheet. As a result, they found that the sliding performance and powdering resistance of a galvannealed steel sheet can be improved by appropriately controlling the balance in content among Mn, P, Cr, and Mo, of the component composition of a steel sheet. Such a galvannealed steel sheet is obtained through hot-dip galvanization and subsequent alloying of the steel sheet. The present invention has been made based on these findings.

Specifically, a steel sheet for use in a hot-dip galvanized steel sheet according to the present invention contains, on the percent by mass basis, 0.06% to 0.15% carbon (C); 1% to 3% manganese (Mn); 0.01% to 0.05% phosphorus (P); 0.03% to 1% chromium (Cr); 0.03% to 1% molybdenum (Mo); and 0.02% to 0.15% aluminum (A1). The steel sheet has a silicon (Si) content of 0.2% or less (inclusive of 0%) and a sulfur (S) content of 0.03% or less (inclusive of 0%) and has a K value of -2.0 or more, in which the K value is calculated according to following Equation (1):

$$K\ value\ =\ 3x[Mo]-5x[Cr] \qquad (1)$$

wherein "[Element]" represents the content (percent by mass) of the element.

The steel sheet preferably further contains at least one element selected from the group consisting of 0.15% or less (exclusive of 0%) titanium (Ti) ; 0.15% or less (exclusive of 0%) niobium (Nb); and 0.15% or less (exclusive of 0%) vanadium (V).

The steel sheet preferably further contains, on the percent by mass basis, 0.01% (exclusive of 0%) boron (B) and/or 0.01% or less (exclusive of 0%) calcium (Ca) as another element.

A steel sheet for use in a galvannealed steel sheet according to the present invention contains, on the percent by mass basis, 0.06% to 0.15% carbon (C) ; 1% to 3% manganese (Mn) ; 0.01% to 0.05% phosphorus (P) ; 0.03% to 1% chromium (Cr) ; 0.03% to 1% molybdenum (Mo); and 0.02% to 0.15% aluminum (Al). The steel sheet has a silicon (Si) content of 0.2% or less (inclusive of 0%) and a sulfur (S) content of 0.03% or less (inclusive of 0%). The steel sheet has a K value of -2.0 or more, in which the K value is calculated according to following Equation (1):

$$K\ value\ =\ 3x[Mo]-5x[Cr] \qquad (1)$$

In addition, the steel sheet has an F value of 0.7 to 3.0, in which the F value is calculated according to following Equation (2) :

$$F\ value\ =\ [Mn]/(20x[P]+3x[Cr]+3x[Mo]) \qquad (2)$$

wherein "[Element] " in Equations (1) and (2) represents the content (percent by mass) of the element.

A hot-dip galvanized steel sheet and a galvannealed steel sheet according to the present invention can be advantageously used as materials for automotive members.

Effect of the Invention

According to the present invention, there is provided a steel sheet for hot-dip galvanization which is resistant to the occurrence of bare spots upon hot-dip galvanization, because the steel sheet has an appropriately controlled balance in content between Mo and Cr, among constitutional elements of the steel sheet.

There is further provided, according to the present invention, a steel sheet for alloyed hot-dip galvanization which yields a galvannealed steel sheet excellent in sliding performance and powdering resistance through hot-dip galvanization and subsequent alloying, because the steel sheet has an appropriately controlled balance in content of Mn, P, Cr, and Mo, among the constitutional elements of the steel sheet.

Consequently, a hot-dip galvanized steel sheet without bare spots can be provided by subjecting the steel sheet for hot-dip galvanization to hot-dip galvanization, and a galvannealed steel sheet excellent in sliding performance and powdering resistance can be provided by subjecting the hot-dip galvanized steel sheet to alloying (galvannealing). These hot-dip galvanized steel sheet and galvannealed steel sheet can be advantageously used as materials for automotive members.

Brief Description of the Drawings

Fig. 1 is an electron micrograph (photograph in place of drawing) of Sample No. 3 in Table 2.
Fig. 2 is a graph showing the relationship among the K value, the iron (Fe) concentration and the occurrence of bare spots.
Fig. 3 is a graph showing the relationship among the F value, the Fe concentration, and the sliding performance or powdering resistance.

Best Mode for Carrying Out the Invention

For preventing the occurrence of bare spots upon hot-dip galvanization of a high-strength steel sheet, it is important to control the balance in content between Cr and Mo contained in the high-strength steel sheet so as to have a K value of -2.0 or more, in which the K value is calculated according to following Equation (1).
If the K value is less than -2.0, there occur a multiplicity of pinhole-like bare spots (ungalvanized portions) in steel sheet surface upon hot-dip galvanization, and this significantly impairs the appearance and quality of steel sheet. The K value is preferably controlled to -1.5 or more, and more preferably to -1 or more.

$$K\ value\ =\ 3x[Mo]-5x[Cr] \qquad\qquad (1)$$

In Equation (1), "[Element]"represents the content (percent by mass) of the element.
The contents of Cr and Mo should be adjusted so as to satisfy the above condition, within the range mentioned below.
Chromium (Cr) content: 0.03% to 1% and Molybdenum (Mo) content: 0.03% to 1%
Chromium (Cr) and molybdenum (Mo), when added in combination, form a multiple oxide in steel sheet surface to thereby prevent the occurrence of bare spots. Specifically, a steel sheet containing Cr alone is resistant to the occurrence of bare spots at a Cr content up to 0.4% but causes the occurrence of bare spots at a Cr content of 0.4% or more. However, when Cr and Mo are added in combination, they form a multiple oxide in steel sheet surface to thereby prevent the occurrence of bare spots. The combination addition of Cr and Mo also yields a steel sheet having good balance between strength and elongation and thereby having both satisfactory mechanical properties and good galvanizing ability, as is described in examples mentioned later. The elements Cr and Mo act to improve hardenability and to concentrate carbon (C) in austenite so as to improve the stability of austenite. They also act to form martensite so as to ensure satisfactory strength of the steel sheet. If the Cr content or Mo content is less than 0.03%, the hardenability is not sufficiently improved, and the amount of oxide in the steel sheet surface is small. The Cr content is preferably 0.05% or more, and more preferably 0.1% or more. The Mo content is preferably 0.05% or more, and more preferably 0.1% or more. The upper limits of these contents are each 1%, because the effects of Cr and Mo become saturated and the cost increases when the Cr content or Mo content is more than 1%. The Cr content is preferably 0.9% or less, and more preferably 0.8% or less. The Mo content is preferably 0.9% or less, and more preferably 0.8% or less.
A steel sheet for use in the present invention contains, as other components, 0.06% to 0.15% carbon (C); 1% to 3% manganese (Mn) ; 0.01% to 0.05% phosphorus (P) ; and 0.02% to 0.15% aluminum (Al). Reasons for specifying these ranges will be described below.
Carbon (C) content: 0.06% to 0.15%
The element carbon (C) is important to improve the strength of steel sheet and affects the amounts and shapes of products of low-temperature transformation,such asbainiteand martensite, so as to improve workability including extensibility (elongation property and stretch flange formability). The C content is set at 0.06% or more, because, if the C content is less than 0.06%, it is difficult to ensure a strength of 590 MPa or more. The C content is preferably 0.07% or more, and more preferably 0.08% or more. If the C content is more than 0.15%, the weldability of the resulting hot-dip galvanized high-strength steel sheet and galvannealed high-strength steel sheet deteriorates. The C content is therefore set at 0.15% or less. The C content is preferably 0.14% or less, and more preferably 0.13% or less.
Manganese (Mn) content: 1% to 3%
The elementmanganese (Mn) is important to stabilize austenite and to ensure the strength of steel sheet itself. The element Mn acts to improve the hardenability and effectively acts to yield a desired metal structure. To exhibit these activities, Mn must be contained in a content of 1% ormore. TheMn content is preferably 1.5% or more, and more preferably 1.8% or more. The Mn content is preferably as large as possible, but if the Mn content is more than 3%, ingot making becomes difficult, and the weldability of the resulting hot-dip galvanized high-strength steel sheet and galvannealed high-strength steel sheet is adversely affected. The Mn content is therefore set at 3% or less. The Mn content is preferably 2.9% or less, and more preferably 2.8% or less.

Phosphorus (P) content: 0.01% to 0.05%

The element phosphorus (P) is fixed as a deposit in steel sheet and is effective to ensure the balance between strength and elongation. To exhibit these activities, phosphorus must be contained in a content of 0.01% or more. The P content is preferably 0.015% or more. However, if the P content is more than 0.05%, for example, galvanizing failure occurs, and the upper limit of the P content is therefore set at 0.05%. The P content is preferably 0.04% or less, and more preferably 0.03% or less.

Aluminum (Al) content: 0.02% to 0.15%

The element aluminum (Al) is contained for deoxidization and should be added in a content of 0.02% or more. The Al content is preferably 0.03% or more, and more preferably 0.04% or more. It shouldbe noted that the excessive addition of Al causes increased oxide inclusions and thereby impairs the surface properties and toughness. Accordingly, the upper limit of the A1 content is set at 0.15%. The Al content is preferably 0.13% or less, and more preferably 0.1% or less.

The elements silicon (Si) and sulfur (S) are basically preferably not contained in a high-strength steel sheet for use in the present invention and are contained, if any, as inevitable impurities. A high-strength steel sheet for use in the present invention should be controlled so as to have a Si content of 0.2% or less and a S content of 0.03% or less.

Silicon (Si) content: 0.2% or less (inclusive of 0%)

The element silicon (Si) forms oxide films such as a $SiO_2$ film on steel sheet surface, impairs the wettability of galvanized layer, and is harmful. Accordingly, the Si content is preferably as small as possible and is reduced to 0.2% or less, and preferably 0.1% or less.

Sulfur (S) content: 0.03% or less (inclusive of 0%)

Sulfur (S) is fixed as MnS deposits in steel sheet, and increased amounts of MnS deposits cause deterioration in extensibility and stretch flange formability. Accordingly, the content of sulfur should be reduced to 0.03% or less even if sulfur is contained as inevitable impurities. The S content is preferably reduced to 0.015% or less.

Ahigh-strength steel sheet according to the present invention satisfies the contents of the compositional elements and may preferably further contain, as other elements, additional components such as (a) at least one selected from the group consisting of 0.15% or less (exclusive of 0%) titanium (Ti); 0.15% or less (exclusive of 0%) niobium (Nb) ; and 0.15% or less (exclusive of 0%) vanadium (V), (b) 0.01% (exclusive of 0%) boron (B), and/or (c) 0.01% or less (exclusive of 0%) calcium (Ca). Reasons for specifying these ranges will be illustrated below.

At least one selected from the group consisting of 0.15% or less (exclusive of 0%) titanium (Ti); 0.15% or less (exclusive of 0%) niobium (Nb); and 0.15% or less (exclusive of 0%) vanadium (V) :

The elements titanium (Ti), niobium (Nb), and vanadium (V) act to enhance deposition and finely divide the structure and are useful for providing higher strength. To exhibit these activities effectively, it is recommended to incorporate these elements in a content of each 0.01% or more, and particularly preferably 0.02% or more. The excessive addition of these elements may cause excessively high strength of a hot-rolled steel sheet and thereby invite defects of shape in cold rolling. Accordingly, the contents of these elements are each set at 0.15% or less, and more preferably 0.13% or less.

Boron (B) content: 0.01% (exclusive of 0%)

The element boron (B) increases the hardenability and improves the strength (tensile strength (TS) and yield strength (YS)) of steel sheet. The addition of boron (B) in combination with Mo controls the hardenability during accelerated cooling after rolling and optimizes the balance between the strength (TS) and toughness of base metal material. To exhibit these activities effectively, the B content is preferably 0.0005% or more, and more preferably 0.001% or more. However, an excessively high B content of more than 0.01% may impair the toughness of base metal material, and the B content is preferably controlled to 0.01% or less, and more preferably 0.05% or less.

Calcium (Ca) content: 0.01% or less (exclusive of 0%)

The element calcium (Ca) allows sulfides in steel to have spherical shapes and thereby contributes to improvement in workability. To exhibit these activities effectively, it is recommended to add Ca in a content of 0.0003% or more, and more preferably 0.0005% or more. However, if Ca is contained in a content exceeding 0.01%, the effects may be saturated and be economically useless. The Ca content is more preferably 0.05% or less.

The remainder (balance) of a high-strength steel sheet for use in the present invention contains iron (Fe) and inevitable impurities and may further contain other elements within ranges not adversely affecting the advantages of the present invention.

As is described above, the occurrence of bare spots upon hot-dip galvanization of a high-strength steel sheet can be prevented by appropriately controlling the balance in content between Cr and Mo in the high-strength steel sheet. The resulting high-strength steel sheet for hot-dip galvanization is excellent in galvanizing ability.

However, when such hot-dip galvanized high-strength steel sheets are subjected to an alloying process, the obtained galvannealed high-strength steel sheets may not be sufficiently improved in sliding performance and powdering resistance in some cases. The present inventors therefore focused attention on the composition of an alloyed galvanized layer after the alloying process and made various investigations. As a result, they found that the sliding performance upon pressing significantly deteriorates when a soft $\zeta$ phase ($FeZn_{13}$) is formed on the surface of an alloyed galvanized layer; and that the powdering resistance significantly deteriorates when a hard brittle $\Gamma$ phase ($Fe_3Zn_{10}$) is formed at the interface between the alloyed galvanized layer and the base metal material (high-strength steel sheet). They further found that the composition of an alloyed galvanized layer is affected by the alloying rate of a galvanized layer during the alloying process of the hot-dip galvanized high-strength steel sheet.

After investigations for appropriately controlling the alloying rate of galvanized layer, the present inventors found that the alloying rate is particularly affected by, of the component composition of a high-strength steel sheet, the contents of Mn, P, Cr, and Mo. Specifically, the elements Mn, P, Cr, and Mo are necessary for improving the hardenability of steel sheet and ensuring the strength thereof; however, a slight variation in their contents significantly affects the alloying rate of galvanized layer. After carrying out various experiments repeatedly, they found that, of the high-strength steel sheets for hot-dip galvanization excellent in galvanizing ability, one having such a component composition as to have an F value represented by following Equation (2) of within a range from 0.7 to 3.0 can yield, through hot-dip galvanization and subsequent alloying, a galvannealed high-strength steel sheet excellent in sliding performance and powdering resistance.

$$F\ value\ =\ [Mn]/(20\times[P]+3\times[Cr]+3\times[Mo]) \qquad (2)$$

Although the detailed mechanism about how elements contained in the high-strength steel sheet affect the alloying rate of galvanized layer has not been clarified, if the F value is less than 0.7, the alloying of the galvanized layer may be unlikely to proceed and a soft $\zeta$ phase ($FeZn_{13}$) may be formed on the surface of the alloyed galvanized layer. The component composition is desirably controlled so as to have an F value of 0.9 or more, and more preferably 1.1 or more. In contrast, if the F value is more than 3.0, the galvanized layer may be excessively alloyed, and a hard and brittle $\Gamma$ phase ($Fe_3Zn_{10}$) is formed at the interface between the alloyed galvanized layer and the base metal material. The component composition is desirably controlled so as to have an F value of 2.8 or less, and more preferably 2.6 or less.

The iron (Fe) concentration of the galvanized layer is preferably 7 to 15 percent by mass. If the Fe concentration is less than 7 percent by mass, the diffusion of Fe as a result of the alloying process may be insufficient, a soft $\zeta$ phase ($FeZn_{13}$) may be formed on the surface of alloyed galvanized layer, and the sliding performance upon pressing may deteriorate. The Fe concentration is more preferably 8 percent by mass or more, and further preferably 9 percent by mass or more. In contrast, if the Fe concentration is more than 15 percent by mass, Fe may excessively diffuse, a hard and brittle $\Gamma$ phase ($Fe_3Zn_{10}$) may be formed at the interface between the alloyed galvanized layer and the base metal material, and powdering may be likely to occur. The Fe concentration is more preferably 14 percent by mass or less, and further preferably 13 percent by mass or less.

To control the Fe concentration of the galvanized layer, the aluminum (A1) content of a molten zinc bath may be controlled. This point will be described later.

A galvannealed high-strength steel sheet excellent in sliding performance and powdering resistance can be obtained by subjecting the high-strength steel sheet for hot-dip galvanization which satisfies the condition on the F value to hot-dip galvanization and alloying the galvanized steel sheet.

The metal structure of the base steel sheet of the hot-dip galvanized steel sheet or galvannealed steel sheet is preferably a composite structure (dual phase) mainly containing ferrite and martensite. By having a composite structure mainly containing ferrite and martensite, the entire galvanized steel sheet can have higher strength. The phrase "mainly containing" as used herein means that the ratio of a total area of the composite structure to that of the entire metal structure of the base steel sheet is 70% or more. The areal ratio is more preferably 80% or more. In this connection, as long as not impairing the strength of the galvanized steel sheet, intrusion of other structural components such as bainite or pearlite may not be eliminated. The ratio by area of ferrite to martensite is preferably about 90:10 to about 25:75.

The metal structure of the base steel sheet may be observed with a scanning electron microscope at a magnification of 3000 times.

The hot-dip galvanized high-strength steel sheet and galvannealed high-strength steel sheet each have a tensile strength (TS) of about 590 to about 1180 MPa and show good balance between the strength and elongation (El), in which the product of TS and E1 is 12000 or more. They are therefore advantageously used, for example, materials for automotive members including members acting to absorb collision energy as skeletal members of automobile, such as front longitudinal members.

A method for manufacturing a high-strength steel sheet for hot-dip galvanization for use in the present invention is not particularly limited. The high-strength steel sheet can be manufactured, for example, by hot-rolling slabs satisfying the above-specified component composition, coiling the hot-rolled steel at a temperature of 700°C or lower, carrying out pickling according to necessity, and then carrying out cold rolling.

The hot rolling can be carried out according to a common procedure. A heating temperature of slabs is preferably in a range from 1000°C to 1300°C from the viewpoints of ensuring a satisfactory finishing temperature and preventing coarse austenite particles. A finishing temperature of the hot rolling is preferably 800°C to 950°C so as to prevent the formation of a texture adversely affecting the workability. A cooling rate after finish rolling is preferably 30°C to 120°C per second, so as to prevent the formation of pearlite.

A coiling temperature is preferably set at 700°C or lower. If the coiling temperature is higher than 700°C, scale on the steel sheet surface may be excessively thick, to thereby impair pickling processability. The lower limit of the coiling temperature is not particularly limited; however, an excessively low coiling temperature may cause the steel sheet to have excessively high hardness and thereby have decreased cold rolling processability; and the lower limit may be set at about 250°C. The coiling temperature is preferably 400°C or higher.

After the hot rolling, where necessary, pickling is carried out according to a common procedure, and cold rolling is conduced. A reduction ratio in cold rolling is preferably set at 30% or more. If the reduction ratio in cold rolling is set at less than 30%, the thickness of the hot-rolled steel sheet must be reduced, it takes a long time to conduct pickling, and the productivity may deteriorate.

Methods for manufacturing a hot-dip galvanized high-strength steel sheet and a galvannealed high-strength steel sheet according to the present invention are not particularly limited. The hot-dip galvanized high-strength steel sheet can be obtained, for example, by carrying out cold rolling according to the above procedure, soaking the cold rolled steel sheet at a temperature equal to or higher than the Ac1 point in a continuous hot-dip galvanization line, and cooling the soaked steel sheet at an average cooling rate of 1°C per second or more to the temperature of a molten zinc bath so as to cover the surface of the high-strength steel sheet with a galvanized layer. On the other hand, the galvannealed high-strength steel sheet can be obtained by subjecting the hot-dip galvanized high-strength steel sheet prepared by the above procedure to an alloying process according to a common procedure, and cooling the alloyed steel sheet at an average cooling rate of 5°C per second or more.

A soaking temperature in the continuous hot-dip galvanization line may be set to be equal to or higher than the $A_{C1}$ point. The soaking is preferably carried out at a temperature higher than the $A_{C1}$ point by about 50°C, in order to allow the high-strength steel sheet to have a composite structure including ferrite and austenite to thereby have increased workability. More specifically, the soaking temperature is preferably about 780°C or higher. The upper limit of the soaking temperature is not particularly limited, but is generally set at 900°C or lower.

Aholding time of the soaking is also not particularly limited, and may be set, for example, at about 10 seconds or more.

After cooling the soaked steel sheet at a cooling rate of 1°C per second or more to the temperature of molten zinc bath, galvanization is carried out. The temperature of molten zinc bath is 400°C to 500°C, and preferably 440°C to 470°C. If the cooling rate is less than 1°C per second, pearlite may be formed and remain as a final structure to thereby impair the workability. The cooling rate is preferably set at 5°C per second or more. The upper limit of the cooling rate is not particularly limited but is preferably set at 50°Cper second in consideration of easy control of the sheet temperature and the costs of facilities.

The composition of the molten zinc bath is not particularly limited, and a known molten zinc bath can be used. It should be noted that the Al content of molten zinc bath is preferably 0.05% to 0.2%. The element aluminum (Al) acts to control the alloying rate of a galvanized layer. When a steel sheet is dipped in a molten zinc bath containing aluminum (Al), an Fe-A1 metal layer is formed on a surface of the steel sheet, i.e., at the interface between the steel sheet and the galvanized layer. However, if the Al content is less than 0.05%, a formed Fe-Al alloy layer may be excessively thin, and, when the steel sheet is dipped in the molten zinc bath, the alloying between the steel sheet and zinc may immediately proceed. Accordingly, the Γ phase may grow excessively before the completion of alloying up to the galvanized surface during the alloying process, and this may impair the powdering resistance (peeling resistance) . TheAl content ismore preferably 0.07% or more. If the Al content, however, is more than 0.2%, the Fe-Al alloy layer may be excessively thick, and the alloying between Fe and Zn may be inhibited so as to retard the alloying of the galvanized layer in the alloying process. In this case, the alloying line should be elongated or another alloying process at high temperatures should be carried out in order to proceed alloying. The Al content is therefore more preferably 0.18% or less.

After the galvanization process, the galvanized steel sheet is cooled at a cooling rate of 5°C per second or more to ordinary temperature so as to transform austenite into martensite. Thus, a composite (dual-phase) structure mainly containing ferrite and martensite is obtained. If the cooling rate is less than 5°C per second, martensite may not be formed, and, contrarily, pearlite and/or bainite may be formed. The cooling rate is preferably set at 10°C per second or more.

To carry out an alloying process after the hot-dip galvanization, the hot-dip galvanized steel sheet may be heated to about 500°C to about 750°C, and preferably about 500°C to about 600°C according to a common procedure. A heating procedure for the alloying process is not particularly limited and can be selected from among various known procedures such as gas heating or induction heating.

A composite structure mainly containing ferrite and martensite can be obtained by cooling the steel sheet after the alloying process at a cooling rate of 5°C per second or more to ordinary temperature.

EXAMPLES

The present invention will be illustrated in further detail with reference to several examples below. It should be noted, however, the following examples are never intended to limit the scope of the present invention, and appropriate modifications and variations without departing from the spirit and scope of the present invention set forth above and below fall within the technical scope of the present invention.

Steels having component compositions (with the remainder being iron and inevitable impurities) given in Table 1 were melted, and the molten steels were cast to yield slabs. The slabs were heated to 1150°C, hot-rolled to a thickness of 2.6mm at a finishing temperature of 870°C to 900°C, cooled at an average cooling rate of 40°C per second, and coiled at 480°C. Next, after carrying out pickling, the steel sheets were cold-rolled at a reduction ratio in cold rolling of 46% to a thickness of 1.4 mm. Thus, cold-rolled steel sheets were manufactured. The resulting cold-rolled steel sheets were heated to 830°C in a continuous hot-dip galvanization line, held at this temperature for 40 seconds so as to conduct a soaking process, cooled at an average cooling rate of 25°C per second, and dipped in a molten zinc bath. The molten zinc bath used herein was a known molten zinc bath, in which the Al content was set at 0.13%. The hot-dip galvanization was conducted by dipping the steel sheets in the molten zinc bath at a temperature of 450°C to 470°C for 3 seconds. Next, the steel sheets were heated to a temperature within a range from 540°C to 560°C, held at this temperature for 15 seconds for carrying out an alloying process, cooled at a cooling rate of 30°C per second or more to room temperature, subjected to temper rolling at a rolling reduction of 1.0%, and thereby yielded galvannealed steel sheets.

The K values and F values were calculated from the component compositions of the steel sheets according to Equations (1) and (2), respectively. The results are also shown in Table 1 below.

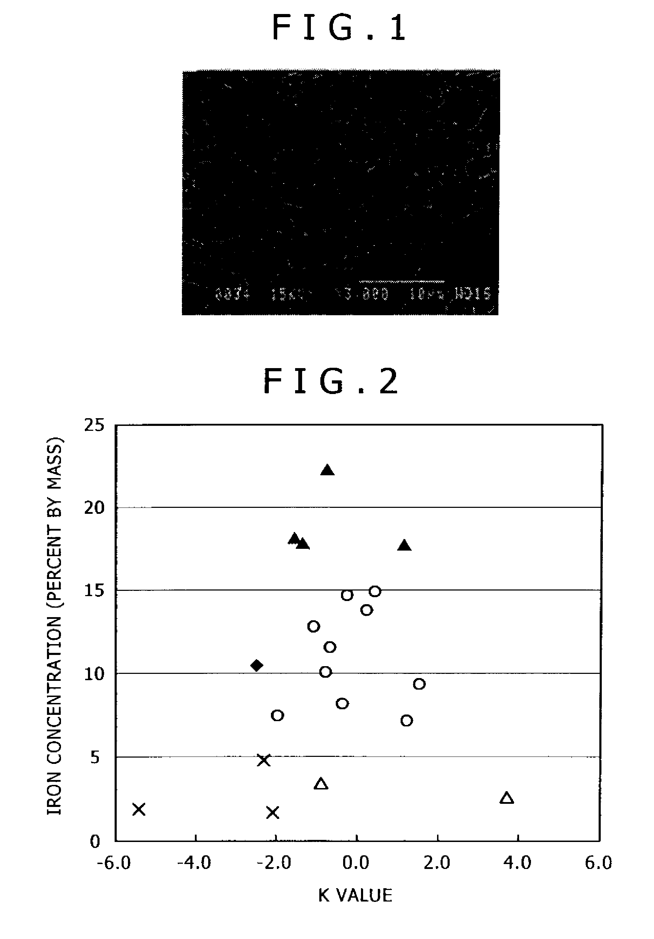

The metal structures at a center position in a thickness direction of the base steel sheets of the galvannealed steel sheets were observed with a scanning electron microscope (SEM) at a magnification of 3000 times. These steel sheets were found to have composite structures mainly containing ferrite and martensite in an areal ratio of 80% or more, with the ratios of the area of ferrite to that of martensite of 74:26 to 32: 68. The electron micrograph of Sample No. 3 in Table 2 below is shown in Fig. 1 as a photograph in place of drawing.

The Fe concentrations of the galvannealed steel sheets were measured by dissolving their alloyed galvanized layers in hydrochloric acid and carrying out atomic absorption spectrometry. The results are shown in Table 2 below.

Next, the tensile strengths (TS) and elongations (El) of the galvannealed steel sheets were measured by carrying out tensile tests using Japanese Industrial Standards (JIS) No. 5 test pieces prepared therefrom. The results are shown in Table 2 below. A sample having a tensile strength (TS) within a range from 590 to 1180 MPa was evaluated as good in tensile strength, and a sample having a tensile strength out of this range was evaluated as poor in tensile strength.

The products of the tensile strength (TS) and the elongation (El) were calculated so as to evaluate the balance between strength and elongation. The results are shown in Table 2 below. In this evaluation, a sample having the product of TS and E1 of 12000 or more was evaluated as good in balance between tensile strength and elongation, and a sample having the product of TS and E1 of less than 12000 was evaluated as poor in balance.

The galvanizing ability, sliding performance, and powdering resistance of the galvannealed steel sheets were evaluated in the following manner.

<Evaluation of Galvanizing Ability>

The galvanizing ability of a sample was evaluated by visually observing the sample on whether or not bare spots occurred. A sample with no bare spot observed was evaluated as good ("Good") in galvanizing ability, and a sample with bare spots observed was evaluated as poor ("Poor") in galvanizing ability. The evaluation results are shown in Table 2 below.

<Evaluation of Sliding Performance>

Theslidingperformancewas evaluated in the followingmanner. A rust preventive oil (supplied from Parker Industries, Inc., "NOX-RUST 550HN (trade name)") was applied in a coating amount of about 1.5 g/m$^2$ to the both sides of a sample galvannealed steel sheet (test piece), and 20-mm square flat tools were pressed to the both sides of the test piece at a contact pressure of about 30 N/mm$^2$. The coefficient of friction ($\mu$ = F/2P) was calculated based on the load (P) and the pull-out load (F) of the test piece, and this was used as an index of evaluation in sliding performance. The evaluation was conducted based on such criteria that a sample having a coefficient of friction $\mu$ of 0.20 or less was evaluated as good in sliding performance, and a sample having a coefficient of friction $\mu$ exceeding 0.20 was evaluated as poor in sliding performance. The results are shown in Table 2 below.

<Evaluation of Powdering Resistance>

The powdering resistance was evaluated by caring out a V-shaped bending test using a V-shaped punch having a bending angle of 60 degrees and a bending radius of 1 mm, and measuring the amount of peeled deposit (galvanized layer) inside of the bent portion. The evaluation was conducted based on such criteria that a sample having a peeling amount of 10 mg or less was evaluated as good in powdering resistance, and a sample having a peeling amount more than 10 mg was evaluated as poor in powdering resistance . The results are shown in Table 2 below.
[Table 1]

| Steel | Component composition of steel sheet (% by mass) | | | | | | | | | | | | | K value | F value |
|---|---|---|---|---|---|---|---|---|---|---|---|---|---|---|---|
| | C | Si | Mn | P | S | Al | Cr | Mo | Ti | Nb | V | B | Ca | | |
| a | 0.07 | 0.03 | 2.2 | 0.011 | 0.001 | 0.050 | 0.11 | 0.10 | - | - | - | - | - | -0.3 | 2.6 |
| b | 0.13 | 0.20 | 2.6 | 0.018 | 0.002 | 0.057 | 0.60 | 0.35 | - | - | - | - | - | -2.0 | 0.8 |
| c | 0.09 | 0.16 | 2.1 | 0.016 | 0.003 | 0.058 | 0.25 | 0.04 | - | - | - | - | - | -1.1 | 1.8 |
| d | 0.11 | 0.15 | 2.7 | 0.011 | 0.002 | 0.040 | 0.13 | 0.70 | - | - | - | - | - | 1.5 | 1.0 |
| e | 0.08 | 0.04 | 2.9 | 0.017 | 0.001 | 0.059 | 0.31 | 0.91 | 0.040 | - | - | - | - | 1.2 | 0.7 |
| f | 0.15 | 0.19 | 1.3 | 0.018 | 0.002 | 0.053 | 0.18 | 0.03 | - | - | - | - | - | -0.8 | 1.3 |
| g | 0.09 | 0.12 | 2.6 | 0.013 | 0.002 | 0.053 | 0.42 | 0.57 | - | - | - | 0.003 | 0.003 | -0.4 | 0.8 |
| h | 0.11 | 0.15 | 2.7 | 0.012 | 0.002 | 0.032 | 0.10 | 0.22 | - | - | - | - | - | 0.2 | 2.2 |
| i | 0.06 | 0.05 | 2.9 | 0.013 | 0.001 | 0.032 | 0.34 | 0.32 | - | 0.050 | - | - | - | -0.7 | 1.3 |
| j | 0.09 | 0,11 | 2.7 | 0.015 | 0.002 | 0.055 | 0.03 | 0.19 | - | - | 0.10 | - | - | 0.4 | 2.8 |
| k | 0.05 | 0.18 | 3.5 | 0.005 | 0.002 | 0.042 | 0.16 | 0.005 | - | - | - | - | - | -0.8 | 5.9 |
| l | 0.13 | 0.07 | 3.5 | 0.006 | 0.001 | 0.053 | 0.28 | 0.005 | - | - | - | - | - | -1.4 | 3.6 |
| m | 0.05 | 0.20 | 4.6 | 0.002 | 0.002 | 0.048 | 0.32 | 0.01 | - | - | - | - | - | -1.6 | 4.5 |
| n | 0.15 | 0.08 | 4.0 | 0.002 | 0.001 | 0.035 | 0.005 | 0.38 | - | - | - | - | - | -1.1 | 3.3 |
| o | 0.06 | 0.16 | 3.0 | 0.010 | 0.001 | 0.034 | 0.60 | 0.18 | - | - | - | 0.003 | 0.003 | -2.5 | 1.2 |
| p | 0.13 | 0.03 | 3.50 | 0.007 | 0.003 | 0.040 | 1.13 | 1.12 | - | - | - | - | - | -2.3 | 0.5 |
| q | 0.06 | 0.13 | 0.48 | 0.026 | 0.002 | 0.033 | 1.09 | 0.005 | - | 0.046 | - | - | - | -5.4 | 0.1 |
| r | 0.11 | 0.19 | 1.20 | 0.017 | 0.003 | 0.043 | 0.72 | 0.900 | 0.037 | - | - | - | - | -0.9 | 0.2 |
| s | 0.14 | 0.02 | 0.42 | 0.025 | 0.002 | 0.051 | 0.005 | 1.23 | - | - | 0.09 | - | - | 3.7 | 0.1 |
| t | 0.14 | 0.14 | 1.00 | 0.043 | 0.002 | 0.037 | 0.980 | 0.92 | - | - | - | - | - | -2.1 | 0.2 |

K value = 3x[Mo]-5x[Cr]
F value = [Mn]/(20x[P]+3x[Cr]+3x[Mo])

EP 1 865 084 A1

[Table 2]

| No. | Steel | Fe concentration in galvanized layer (% by mass) | Mechanical properties | | | | Galvanizing ability | Sliding performance | | Peeling resistance | |
|---|---|---|---|---|---|---|---|---|---|---|---|
| | | | YP (MPa) | TS (MPa) | EI (%) | TSxEI (MPa.%) | | Coefficient of friction | Evaluation | Peeling amount (mg) | Evaluation |
| 1 | a | 14.7 | 574 | 821 | 15.1 | 12397 | Good | 0.146 | Good | 9.9 | Good |
| 2 | b | 7.5 | 1005 | 1203 | 10.5 | 12632 | Good | 0.198 | Good | 5.8 | Good |
| 3 | c | 12.8 | 657 | 1010 | 12.4 | 12573 | Good | 0.158 | Good | 9.5 | Good |
| 4 | d | 9.4 | 725 | 1050 | 12.7 | 13329 | Good | 0.184 | Good | 7.3 | Good |
| 5 | e | 7.2 | 717 | 1120 | 12.0 | 13465 | Good | 0.199 | Good | 5.6 | Good |
| 6 | f | 10.1 | 496 | 790 | 17.5 | 13825 | Good | 0.173 | Good | 7.7 | Good |
| 7 | g | 8.2 | 635 | 920 | 14.2 | 13077 | Good | 0.195 | Good | 6.5 | Good |
| 8 | h | 13.8 | 552 | 798 | 16.0 | 12768 | Good | 0.152 | Good | 9.7 | Good |
| 9 | i | 11.6 | 435 | 680 | 19.8 | 13464 | Good | 0.165 | Good | 8.4 | Good |
| 10 | j | 14.9 | 602 | 886 | 14.7 | 13024 | Good | 0.146 | Good | 10.0 | Good |
| 11 | k | 22.3 | 547 | 749 | 13.4 | 10072 | Good | 0.112 | Good | 34.3 | Poor |
| 12 | l | 17.9 | 833 | 1126 | 8.7 | 9807 | Good | 0.136 | Good | 21.9 | Poor |
| 13 | m | 18.2 | 863 | 1198 | 8.4 | 10009 | Good | 0.138 | Good | 18.2 | Poor |
| 14 | n | 17.8 | 758 | 997 | 10.7 | 10709 | Good | 0.141 | Good | 12.7 | Poor |
| 15 | o | 10.5 | 506 | 674 | 16.4 | 11025 | Poor | 0.166 | Good | 8.1 | Good |
| 16 | p | 4.8 | 757 | 996 | 10.4 | 10358 | Poor | 0.202 | Poor | 5.3 | Good |
| 17 | q | 1.9 | 870 | 1115 | 10.2 | 11373 | Poor | 0.221 | Poor | 3.9 | Good |
| 18 | r | 3.4 | 991 | 1223 | 8.4 | 10303 | Good | 0.208 | Poor | 4.7 | Good |
| 19 | s | 2.6 | 942 | 1149 | 9.2 | 10546 | Good | 0.211 | Poor | 4.2 | Good |
| 20 | t | 1.7 | 1069 | 1243 | 7.7 | 9544 | Poor | 0.214 | Poor | 3.6 | Good |

EP 1 865 084 A1

Tables 1 and 2 demonstrate as follows. Samples Nos. 1 to 10 satisfy conditions as specified in the present invention, are free from the occurrence of bare spots, and are excellent in sliding performance and powdering resistance. In contrast, Samples Nos. 11 to 20 do not satisfy the conditions as specified in the present invention and are poor in mechanical properties, particularly in the balance between strength and elongation. In addition, they suffer from the occurrence of bare spots or are poor in at least one of sliding performance and powdering resistance.

Fig. 2 is a graph showing the relationship among the K value, the Fe concentration, and the occurrence of bare spots. In Fig. 2, data indicated by the open circle, closed triangle, and open triangle represent data of samples without the occurrence of bare spots; and data indicated by the closed rhombus and "X" represent data of samples with the occurrence of bare spots. In this connection, data indicated by the closed triangle are the data of a sample evaluated as poor in powdering resistance; data indicated by the open triangle are the data of a sample evaluated as poor in sliding performance; and data indicated by the closed rhombus are the data of a sample evaluated as poor both in powdering resistance and sliding performance.

Fig. 2 demonstrates that a sample having a K value within the range as specified in the present invention is free from bare spots, but a sample having a K value out of the range suffers from bare spots.

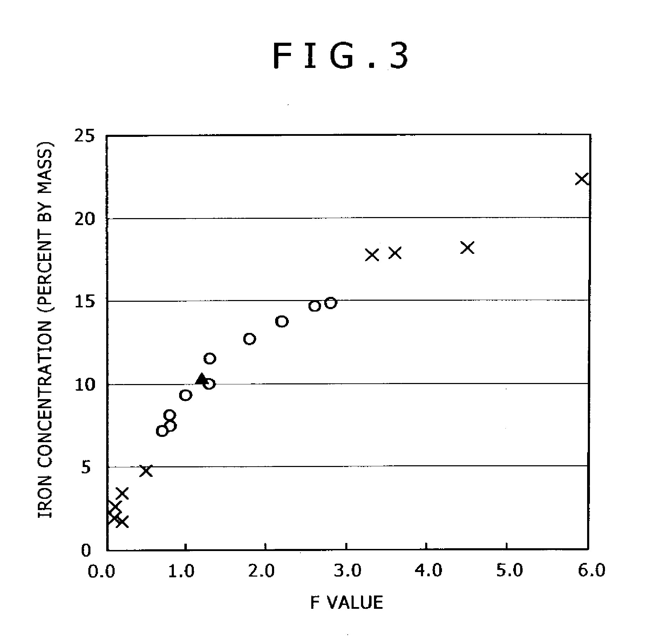

Fig. 3 is a graph showing the relationship among the F value, the Fe concentration, and the sliding performance or powdering resistance. In Fig. 3, data indicated by the open circle represent data of a sample having good sliding performance and good powdering resistance; data indicated by "X" represent data of a sample having poor sliding performance or powdering resistance; and data indicated by the closed triangle represent the data of a sample which is good in sliding performance and powdering resistance but suffers from the occurrence of bare spots.

Fig. 3 demonstrates that a sample having an F value within the range as specified in the present invention is excellent in sliding performance and powdering resistance; but, in contrast, a sample having an F value out of this range is poor in sliding performance or powdering resistance.

**Claims**

1. A hot-dip galvanized steel sheet, wherein a steel sheet of the hot-dip galvanized steel sheet before galvanization comprises, on the percent by mass basis:

   0.06% to 0.15% carbon (C);
   1% to 3% manganese (Mn);
   0.01% to 0.05% phosphorus (P);
   0.03% to 1% chromium (Cr);
   0.03% to 1% molybdenum (Mo); and
   0.02% to 0.15% aluminum (A1), wherein the steel sheet before galvanization has a silicon (Si) content of 0.2% or less (inclusive of 0%) and a sulfur (S) content of 0.03% or less (inclusive of 0%), and

   wherein the steel sheet before galvanization has a K value of -2.0 or more, the K value being calculated according to following Equation (1):

   $$K \text{ value} = 3 \times [Mo] - 5 \times [Cr] \qquad (1)$$

   wherein "[Element]" represents the content (percent by mass) of the element.

2. The hot-dip galvanized steel sheet according to Claim 1, wherein the steel sheet of the hot-dip galvanized steel sheet before galvanization further comprises, on the percent by mass basis, at least one selected from the group consisting of:

   0.15% or less (exclusive of 0%) titanium (Ti);
   0.15% or less (exclusive of 0%) niobium (Nb); and
   0.15% or less (exclusive of 0%) vanadium (V).

3. The hot-dip galvanized steel sheet according to Claim 1, wherein the steel sheet of the hot-dip galvanized steel sheet before galvanization further comprises, on the percent by mass basis:

   0.01% (exclusive of 0%) boron (B).

4. The hot-dip galvanized steel sheet according to Claim 1, wherein the steel sheet of the hot-dip galvanized steel sheet before galvanization further comprises, on the percent by mass basis:

   0.01% or less (exclusive of 0%) calcium (Ca).

5. A galvannealed steel sheet, wherein a steel sheet of the galvannealed steel sheet before galvanization comprises, on the percent by mass basis:

   0.06% to 0.15% carbon (C);
   1% to 3% manganese (Mn);
   0.01% to 0.05% phosphorus (P);
   0.03% to 1% chromium (Cr);
   0.03% to 1% molybdenum (Mo); and
   0.02% to 0.15% aluminum (A1), wherein the steel sheet before galvanization has a silicon (Si) content of 0.2% or less (inclusive of 0%) and a sulfur (S) content of 0.03% or less (inclusive of 0%),

   wherein the steel sheet before galvanization has a K value of -2.0 or more, the K value being calculated according to following Equation (1) :

$$K \text{ value } = 3 \times [Mo] - 5 \times [Cr] \qquad (1)$$

   and wherein the steel sheet before galvanization has an F value of 0.7 to 3.0, the F value being calculated according to following Equation (2):

$$F \text{ value } = [Mn] / (20 \times [P] + 3 \times [Cr] + 3 \times [Mo]) \qquad (2)$$

   wherein " [Element] " in Equations (1) and (2) represents the content (percent by mass) of the element.

6. An automotive member comprising the hot-dip galvanized steel sheet of Claim 1 as a material.

7. An automotive member comprising the galvannealing of Claim 5 as a material.

# FIG.1

# FIG.2

# FIG.3

**INTERNATIONAL SEARCH REPORT**

| International application No. |
| --- |
| PCT/JP2006/305955 |

A. CLASSIFICATION OF SUBJECT MATTER
*C22C38/00*(2006.01), *C21D9/46*(2006.01), *C22C38/38*(2006.01), *C23C2/06*(2006.01)

According to International Patent Classification (IPC) or to both national classification and IPC

B. FIELDS SEARCHED

Minimum documentation searched (classification system followed by classification symbols)
*C22C38/00*(2006.01), *C21D9/46*(2006.01), *C22C38/38*(2006.01), *C23C2/06*(2006.01)

Documentation searched other than minimum documentation to the extent that such documents are included in the fields searched
Jitsuyo Shinan Koho          1922-1996     Jitsuyo Shinan Toroku Koho    1996-2006
Kokai Jitsuyo Shinan Koho    1971-2006     Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 59-43975 B2  (NKK Corp.),<br>25 October, 1984 (25.10.84),<br>Full text<br>(Family: none) | 1,5-7<br>2-4 |
| X<br>Y | JP 2003-193186 A  (JFE Steel Corp.),<br>09 July, 2003 (09.07.03),<br>Full text<br>(Family: none) | 1,5-7<br>2-4 |
| X<br>Y | JP 58-58413 B2  (Sumitomo Metal Industries,<br>Ltd.),<br>24 December, 1983 (24.12.83),<br>Full text<br>(Family: none) | 1,5<br>2-4,6,7 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 June, 2006 (19.06.06) | Date of mailing of the international search report<br>    27 June, 2006 (27.06.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/305955

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2002-322542 A   (NKK Corp.),<br>08 November, 2002 (08.11.02),<br>Full text<br>(Family: none) | 1,2,5-7<br>3,4 |
| X<br>Y | JP 2004-211138 A   (JFE Steel Corp.),<br>29 July, 2004 (29.07.04),<br>Full text<br>(Family: none) | 1,2,5-7<br>3,4 |
| X<br>Y | JP 2003-321734 A   (JFE Steel Corp.),<br>14 November, 2003 (14.11.03),<br>Full text<br>(Family: none) | 1,2,5-7<br>3,4 |
| X<br>Y | JP 3267324 B2   (Nisshin Steel Co., Ltd.),<br>18 March, 2002 (18.03.02),<br>Full text<br>(Family: none) | 1-3,5<br>4,6,7 |
| X<br>Y | JP 2002-3996 A   (Sumitomo Metal Industries,<br>Ltd.),<br>09 January, 2002 (09.01.02),<br>Full text<br>(Family: none) | 1,3,5-7<br>2,4 |
| X<br>Y | JP 2001-49391 A1   (Kobe Steel, Ltd.),<br>20 February, 2001 (20.02.01),<br>Full text<br>& US 6312536 B1          & GB 2351740 A<br>& FR 2794133 A1 | 1,4-7<br>2,3 |

Form PCT/ISA/210 (continuation of second sheet) (April 2005)

**EP 1 865 084 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001247949 A
- JP 2002115039 A

- JP 11323492 A

19